# EUROPÄISCHE PATENTSCHRIFT

(11) **EP 0 392 141 B1**
(45) Veröffentlichungstag und Bekanntmachung des Hinweises auf die Patenterteilung: **20.10.1993**
(21) Anmeldenummer: 90101646.9
(22) Anmeldetag: 27.01.1990
(51) Int. Cl.: H04Q 11/04, H04Q 3/545

(54) **Digitale Fernmeldevermittlungsanlage**
Digital communications exchange
Central numérique de télécommunication

(30) Priorität: 13.04.1989 DE 3912078
(43) Veröffentlichungstag der Anmeldung: 17.10.1990
(73) Patentinhaber: TELENORMA GMBH, 60326 Frankfurt am Main (DE)
(72) Erfinder: Bock, Hans-Jürgen, Dipl.-Ing., D-6100 Darmstadt 12 (DE); Döbold, Herbert, D-5000 Köln (DE)

(56) Entgegenhaltungen:
- EP-A- 0 153 753
- EP-A- 0 238 257
- EP-A- 0 365 200
- PATENT ABSTRACTS OF JAPAN, vol. 11, no. 113 (E-497)(2560) 9. April 1987 & JP-A-61 261 951

## Beschreibung

Die Erfindung betrifft eine digitale Fernmeldevermittlungsanlage mit einer, einen Speicher aufweisenden Steuereinrichtung und mit einer Vielzahl von Anschlußschaltungen zum Anschluß von Endgeräten über Anschlußleitungen und Leitungsschaltungen zum Anschluß von zu anderen Vermittlungsanlagen führenden Verbindungsleitungen, wobei Anschluß- und/oder Verbindungsleitungen jeweils mindestens zwei Nutzkanäle und einen Daten- und/oder Signalisierungskanal aufweisen, die Informationen der Nutzkanäle zwischen der Anschluß- bzw. Leitungsschaltung und einer Koppeleinrichtung der Fernmeldevermittlungsanlage übertragen werden, während die Informationen des Daten- und/oder Signalisierungskanals zwischen der Anschluß- bzw. Leitungsschaltung und der Steuereinrichtung über ein Bussystem übermittelt werden.

Eine derartige Fernmeldevermittlungsanlage ist bereits bekannt. So wird in der DE-PS 34 05 011 eine Schaltungsanordnung zum Betreiben von zweiadrigen, digitalen Anschluß- und/oder Verbindungsleitungen an einer Fernmeldevermittlungsanlage beschrieben, bei welcher die Informationen des Daten- und/oder Signalisierungskanals zwischen der Anschluß- bzw. der Leitungsschaltung und der Steuereinrichtung der Fernmeldevermittlungsanlage über ein Bussystem übermittelt werden. Zur Ühertragung der Nutzinformationen stehen pro Anschlußleitung zwei Nutzkanäle mit einer Übertragungsgeschwindigkeit von jeweils 65 kbit/s zur Verfügung, während der Daten- und/oder Signalisierungskanal zur Übermittlung von vermittlungstechnischen Informationen eine Übertragungsgeschwindigkeit von 6 kbit/s aufweist.

Die Steuereinrichtung einer derartigen Fernmeldevermittlungsanlage dient u. a. zur Steuerung des Verbindungsauf- und -abbaus und der Durchschaltung der Verbindungswege innerhalb einer Koppeleinrichtung. Neben anderen Speicher-einrichtungen weist die Steuereinrichtung auch einen sogenannten Kundendatenspeicher auf, welcher beispielsweise Informationen über die Zuordnung von Rufnummer zur Anschlußlage, Berechtigungen und andere anschlußbezogene Informationen enthält. Die Eingabe der entsprechenden Informationen in den Kundendatenspeicher kann beispielsweise über ein an einem Teilnehmeranschluß angeschlossenes Endgerät oder auch über ein an einem mehrere dezentrale Steuereinrichtungen mit einer übergeordneten Steuereinrichtung verbindenden Bussystem angeschlossenen Datenterminal erfolgen, wie dies beispielsweise in der DE-OS 34 44 649 beschrieben ist. Eine weitere Möglichkeit zur Eingabe von Informationen in einen Kundendatenspeicher besteht darin, daß in einem aus einer Vielzahl von Vermittlungsstellen gebildeten Netz ein gemeinsamer Bedienrechner vorgesehen ist, welcher über den Signalisierungskanal Zugriff zu den Kundendatenspeichern der einzelnen Vermittlungsstellen hat. Ein derartiger Bedienrechner wird beispielsweise in der DE-OS 21 39 275 oder in dem Buch "Betriebsmessungen der Fernmeldetechnik", Teil 2: Vermittlungstechnik, Fachverlage Schiele und Schön GMBH, Berlin 1976, auf den Seiten 360 und 361 beschrieben.

Die Aufgabe der Erfindung besteht nun darin, eine digitale Fernmeldevermittlungsanlage der eingangs genannten Art dahingehend auszugestalten, daß die Änderung des Inhalts des Kundendatenspeichers erleichtert und darüber hinaus die Vermittlungsanlage mit zusätzlichen Leistungsmerkmalen versehen werden kann, ohne daß hierzu vermittlungstechnische Eingriffe in die Steuerungsstruktur der Fernmeldevermittlungsanlage notwendig sind.

Diese Aufgabe wird dadurch gelöst, daß ein oder mehrere Rechner über jeweils eine Anschlußleitung angeschlossen sind, daß die Steuereinrichtung eine Hilfssteuereinrichtung aufweist, daß durch an der Fernmeldevermittlungsanlage angeschlossene Einrichtungen (beispielsweise Endgeräte, Vermittlungsplätze, Rechner) Änderungen im Speicher veranlaßbar sind, daß durch die Hilfssteuereinrichtung die Änderungen im Speicher überwacht werden, daß die Hilfssteuereinrichtung eine Tabelle mit Informationen über die einzelnen Rechner aufweist und daß durch diese Informationen festgelegt ist, welche Daten des Speichers bzw. eines Rechners mit den Daten welches Rechners bzw. des Speichers ggf. abzugleichen sind.

Dabei kann ein bestimmter Teil der Kundendaten des Speichers der Steuereinrichtung sich ebenfalls im Rechner befinden, wobei beispielsweise zunächst die Änderungen der Kundendaten im Rechner und anschließend die Änderung der Kundendaten im Speicher der Steuereinrichtung der Fernmeidevermittlungsanlage vorgenommen wird. Weiterhin kann der Kundendatenspeicher Informationen enthalten, welche nur zeitweilig im Rechner benötigt werden. Diese werden nach Bedarf aus dem Speicher der Steuereinrichtung der Fernmeldevermittlungsanlage durch den Rechner abgerufen. Der Rechner kann beispielsweise auch als Telefonbuch fungieren, wobei neben den Kundendaten, die auch im Speicher der Steuereinrichtung der Fernmeldevermittlungsanlage vorhanden sind, zusätzliche Informationen im Rechner enthalten sind, die vermittlungstechnisch keine Bedeutung haben.

Der Anschluß von Rechnern an einer Fernsprechnebenstellenanlage, die einen Bildschirm und eine Tastatur aufweisen, wird bereits in der EP-OS 0 266 151 beschrieben. Hier dienen jedoch die an der Anschlußleitung angeschlossenen Rechner nicht zum Ändern der Kundendaten in der Steuereinrichtung der Fernsprechnebenstellenanlage, ebensowenig ist über die angeschlossenen Rechner ein Eingriff in Vermittlungsvorgänge möglich. In der DE-OS 2 120 562 ist eine zeitmultiplexe Fernsprechvermittlungseinrichtung beschrieben, bei welcher ein Rechner an der Steuereinrichtung der Vermittlungsanlage angeschlossen ist, wobei der Rechner die Steuereinrichtung hinsichtlich Zusatzmerkmale ergänzt. Eine Änderung des Kundendatenspeichers ist bei dieser Konfiguration nicht möglich.

In der EP 0 365 200 wird ein Fernmeldesystem beschrieben, bei welchem die Endgeräte mit zusätzlichen Leistungsmerkmalen versehen werden können, dabei wird vom Endgerät die Steuereinrichtung der Fernmeldevermittlungsanlage über das gewünschte Leistungsmerkmal informiert, worauf von seiten der Steuereinrichtung das für das Leistungsmerkmal benötigte Programm an das Endgerät übermittelt wird.

Schließlich wird in der EP-OS 0 153 753 ein Verfahren für eine Fernsprechanlage beschrieben, bei welcher besondere Bedienfunktionen zu Endstellen zugeordnet werden können. Diese Bedienfunktionen werden in der Steuereinrichtung der Vermittlungsanlage abgespeichert und bei jedem Verbindungsaufbau abgefragt.

Die Lösung der Aufgabe bei einer digitalen Fernmeldevermittlungsanlage der eingangs genannten Art, bei welcher die vermittlungstechnischen für die Steuereinrichtung derselben bestimmten, über den Daten- und/oder Signalisierungskanal übermittelten Informationen eines Endgeräts bzw. einer weiteren angeschlossenen Vermittlungs-anlage durch ein besonderes Kennzeichen markiert werden und die Verarbeitung dieser Informationen aufgrund der Kennzeichnung in der Steuereinrichtung der Fernmeldevermittlungsanlage erfolgt, besteht auch darin, daß die Steuereinrichtung eine Hilfssteuereinrichtung aufweist, daß durch ein berechtigtes Endgerät bzw. die weitere Vermittlungsanlage anstelle des besonderen (ersten) Kennzeichens ein abweichendes (zweites) Kennzeichen eingesetzt wird, daß die derart markierten Informationen des Daten-und/oder Signalisierungskanals der Hilfssteuereinrichtung übermittelt werden, in welcher das zweite Kennzeichen aus der Informationen entfernt und das besondere (erste) Kennzeichen eingefügt wird, worauf anschließend eine Übermittlung der Information an die Steuereinrichtung der Fernmeldevermittlungsanlage erfolgt.

Auf diese Weise ist es möglich, über die Hilfssteuereinrichtung beispielsweise Verbindungen zwischen Teilnehmern oder zwischen Teilnehmern und Verbindungsleitungen über den Rechner zu veranlassen.

Die Erfindung wird anhand eines Ausführungsbeispiels näher erläutert, welches in der Zeichnung dargestellt ist.

Es zeigt:
- Fig. 1: das Blockschaltbild einer digitalen Fernmeldevermittlungsanlage
und
- Fig. 2: der Aufbau eines Datenwortes einer Signalisierungsinformation.

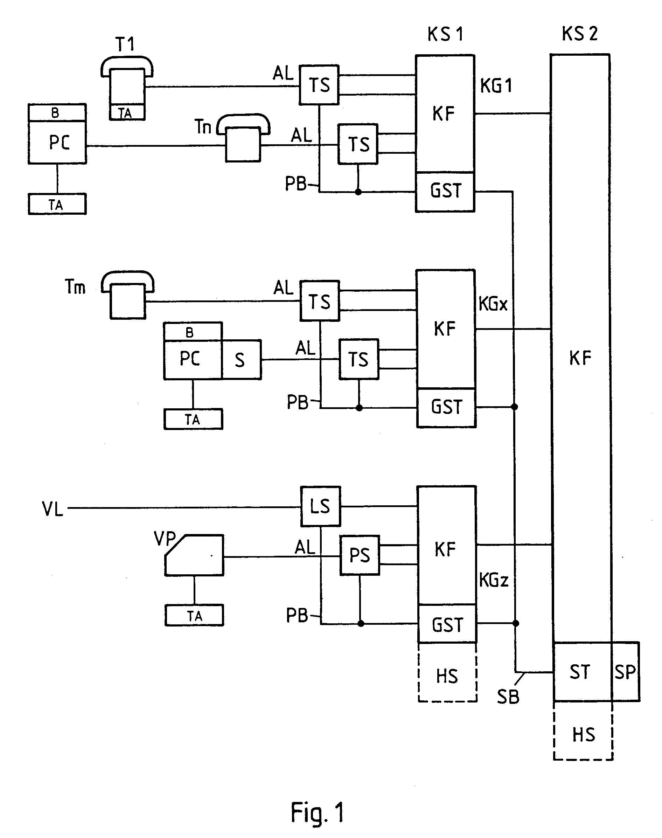

Eine digitale Fernmeldevermittlungsanlage, wie sie in Fig. 1 gezeigt wird, besteht mindestens aus einer Koppelgruppe KG, die ein Koppelfeld KF aufweist, an welchem eine Vielzahl von Teilnehmeranschlußschaltungen TS und/oder Leitungsschaltungen LS angeschlossen sind. Eine Teilnehmeranschlußschaltung TS dient zum Anschluß einer Anschlußleitung, mit welcher ein Fernsprechapparat T oder ein Vermittlungsplatz VP verbunden ist. Auf der Anschlußleitung AL und evtl. auch auf der die Fernmeldevermittlungsanlage mit einer anderen Vermittlungsanlage verbindenden Verbindungsleitung VL werden zwei Nutz- und ein Daten- und/oder Signalisierungskanal übermittelt, wobei die Nutzkanäle jeweils eine Übertragungsgeschwindigkeit von 64kbit/s und der Daten- und/oder Signalisierungskanal eine Übertragungsgeschwindigkeit von 16kbit/s aufweisen. In der Teilnehmeranschlußschaltung TS, in der Platzsteuereinrichtung PS und evtl. auch in der Leitungsschaltung LS erfolgt ein Aufspreizen bzw. Zusammenfügen der Kanäle, so daß die Teilnehmeranschlußschaltungen TS die Platzsteuereinrichtungen PS und evtl. die Leitungsschaltung LS mit zwei Leitungen mit dem Koppelfeld KF verbunden sind, wobei die eine Leitung für die Übermittlung des einen Nutzkanals und die andere Leitung für die Übermittlung des anderen Nutzkanals benötigt wird.

Die Daten- und Signalisierungsinformationen werden in der Teilnehmeranschlußschaltung TS und in der Platzsteuerung PS und evtl. auch in der Leitungsschaltung LS aus dem Informationsfluß auf der Anschlußleitung AL bzw. auf der Verbindungsleitung VL herausgenommen bzw. diesem hinzugefügt, wobei die Übermittlung dieser Informationen zwischen den Teilnehmeranschlußschaltungen TS und den Platzsteuerungen PS und den Leitungsschaltungen LS über ein peripheres Bussystem PB erfolgt.

Sind mehrere Koppelgruppen KG1 bis KGz vorhanden, so bilden diese die Koppelstufe KS1, wobei die koppelgruppenübergreifenden Verbindungen über die Koppelstufe KS2 abgewickelt werden. Hierzu ist diese mit einem Koppelfeld KF versehen, die von einer eigenen Steuereinrichtung ST gesteuert wird. Die Gruppensteuerungen GST der Koppelgruppen KG sind untereinander und mit der Steuereinrichtung ST über einen Systembus SB verbunden, über welchen die vermittlungstechnischen Informationen zwischen den Gruppensteuerungen GST der einzelnen Koppelgruppen KG und der übergeordneten Steuereinrichtung ST ausgetauscht werden.

Wie bereits erwähnt, sind an den Anschlußleitungen AL Fernsprechapparate T1, Tn und Tm angeschlossen. Bei den Fernsprechapparaten Tn und Tm kann es sich beispielsweise um einfache, digitale Fernsprechapparate handeln, während der Fernsprechapparat T1 ein sogenanntes Multifunktion-Terminal mit einer Tastatur TA sein kann. Am Fernsprechapparat Tn ist ein Rechner PC mit einem Bildschirm B und einer Eingabetastatur TA angeschlossen, und zwar beispielsweise an dem internen, nicht gezeigten Bussystems der Fernsprechteilnehmerstation. An einer Teilnehmeranschlußschaltung TS der Koppelgruppe KGx ist direkt an der Anschlußleitung AL ein Rechner PC mit ebenfalls mit einem Bildschirm B und einer Eingabetastatur TA angeschlossen, welcher eine besondere Schnittstelle S zum Anschluß an die Anschlußleitung AL aufweist. Der Vermittlungsplatz VP weist ebenfalls eine Eingabetastatur TA und eine nicht gezeigte Anzeigevorrichtung auf, wie dies ebenso bei dem Fernsprechapparat T1 der Fall sein kann.

An einer der Gruppensteuerungen GST oder auch an der übergeordneten Steuereinrichtung ST ist eine Hilfssteuereinrichtung HS angeschlossen, die auch einen Teil der Steuereinrichtung GST bzw. ST bilden kann. Die betreffende Gruppensteuerung GST bzw. die Steuereinrichtung ST weist einen Speicher SP auf, der nur bei der Steuereinrichtung ST dargestellt ist. Dieser Speicher enthält eine Vielzahl von Daten, beispielsweise auch die Kundendaten sämtlicher an der digitalen Fernmeldevermittlungsanlage angeschlossenen peripheren Einrichtungen, bzw. deren Anschlüsse.

Der Kundendatenspeicher in dem Speicher SP enthält beispielsweise folgende Daten, die im Rahmen des Verbindungsaufbaus von der Steuereinrichtung ST benötigt werden. Diese sind beispielsweise:
hardware-Adresse
Zustand des Endgeräts
Art des Endgeräts
Berechtigungen
Codewahl
Sammelanschluß
Rufumleitung
Nachtstellen
Wahlbewertung
Bündelverwaltung
Sperrwerk
Grunddaten
Gebühreninformationen
Rufnummer
Der Kundendatenspeicher im Speicher SP kann auch zusätzlich die Daten für ein "Telefonbuch" enthalten, dessen Inhalt durch die Endgeräte abrufbar und dort anzeigbar ist. Zu den Daten für das Telefonbuch zählen beispielsweise neben der Rufnummer der
Name, Vorname
Abteilung
Kostenstelle
Gebäude
Raum des betreffenden Anschlußinhabers
Ergänzend zu diesen Mindestinformationen für das "Telefonbuch", sind beispielsweise in einem Rechner PC noch weitere Informationen abgelegt, wie z. B.
Hauptabteilung
Organisationseinheit
VIP-Information
Der gleiche oder ein anderer Rechner PC kann auch Angaben über die Netzwerk-Organisation enthalten. Hierzu zählen beispielsweise
Rufnummer
Raum
Art des Endgeräts
Verteilerdaten
Kabeldaten
Zustand des Endgeräts
Der gleiche Rechner PC oder ein anderer Rechner PC kann für die Gesprächsdatenverwaltung vorgesehen sein. Er enthält dann die folgenden Daten:
Rufnummer
Personalnummer
Name
Projektnummer
Kostenstelle
Dienstgebühren
Privatgebühren
Der Vergleich der angegebenen Listen der einzelnen Daten zeigt deutlich, daß vielfach die gleichen Daten für unterschiedliche Aufgaben in den unterschiedlichen Rechnern PC benötigt werden. Dies bedeutet einen Abgleich der Daten untereinander, wenn an einer Stelle eine Änderung vorgenommen wird. Es wird einmal davon ausgegangen, daß die Änderung von Daten im Kundendatenspeicher im Speicher SP von einem Endgerät, z. B. vom Fernsprechapparat T1 oder vom Vermittlungsplatz VP vorgenommen wird. In diesem Fall erfolgt die Eingabe der Änderungen über die Eingabetastatur TA des Endgeräts. Die Änderungsinformationen werden über den Daten- und/oder Signalisierungskanal auf der Anschlußleitung AL zur Teilnehmeranschlußschaltung TS bzw. zur Platzsteuerung PS übertragen und von dort über das periphere Bussystem PB der betreffenden Gruppensteuerung GST zugeführt. Diese gibt die Daten an den Systembus SB weiter, worauf diese dann zur Gruppensteuerung GST bzw. zur übergeordneten Steuereinrichtung ST gelangen, welche mit einer Hilfssteuereinrichtung HS versehen ist. In der Hilfssteuereinrichtung HS wird, wieweiter unten noch ausführlich beschrieben, erkannt, daß es sich bei der Information um eine Änderungsinformation für den Kundendatenspeicher handelt, worauf dieselbe der Gruppensteuerung GST bzw. der Steuereinrichtung ST übermittelt wird und dort zur Durchführung der betreffenden Änderung dient. In der Hilfssteuereinrichtung HS ist eine entsprechende nicht gezeigte Tabelle vorhanden, welche u.a.Auskunft darüber gibt, welche Datenänderungen im Kundendatenspeicher des Speichers SP welchem Rechner PC mitzuteilen sind. Jeder Rechner PC meldet sich über den Daten- und/oder Signalisierungskanal in regelmäßigen Abständen bei der Hilfssteuereinrichtung HS, so lange er betriebsfähig ist. Sobald eine Änderung im Kundendatenspeicher des Speichers SP vorgenommen worden ist, wird in der Hilfssteuereinrichtung HS festgestellt, ob diese Änderung einem Rechner PC mitzuteilen ist, und falls dies der Fall ist, welchem Rechner. Die Hilfssteuereinrichtung veranlaßt daraufhin die Übermittlung der Änderung an den betreffenden Rechner PC.

Betrifft die Änderung mehrere Rechner PC, so kann der Datenabgleich zwischen den weiteren Rechnern zur Entlastung des Systembus SB über einen Nutzkanal erfolgen, wobei die Steuerung des Verbindungsauf- und -abbaus auf Veranlassung der Hilfssteuereinrichtung HS erfolgen kann.

In jedem Rechner PC ist ebenfalls eine Tabelle mit den Informationen über sämtliche Rechner PC abgelegt, die mit der nicht gezeigten Tabelle in der Hilfssteuereinrichtung HS übereinstimmt. Bei einer Datenänderung wird die Art der Änderung und der Ort der Änderung in dieser änderung wird die Art der Änderung und der Ort der Änderung in dieser Tabelle vermerkt und die Tabelle in sämtlichen genannten Einrichtungen aktualisiert. Auf der Grundlage dieser Tabelle sind die Rechner PC in der Lage, den Datenabgleich untereinander selbst vorzunehmen, wobei der Verbindugnsauf- und -abbau durch einen Rechner PC steuerbar ist und der Datenaustausch über einen oder beide Nutzkanäle erfolgt.

Wird die Änderung des Kundendatenspeichers im Speicher SP über die Eingabetastatur TA eines Rechners PC durchgeführt, so erfolgt zunächst die Änderung im nicht gezeigten Speicher des betreffenden Rechners. Anschließend erfolgt zunächst der Datenabgleich zwischen dem Speicherinhalt des Rechners PC und dem Inhalt des Kundendatenspeichers im Speicher SP und der weitere Datenabgleich in der bereits beschriebenen Weise. Erfolgt gleichzeitig eine Änderung des Inhalts des Kundendatenspeichers des Speichers SP von zwei Eingabetastaturen TA, so kann über die Hilfssteuereinrichtung der Zugriff zu dem Kundendatenspeicher gesteuert werden. Dies gilt für alle Eingabearten, ob nun vom Endgerät oder vom Rechner. Der Zugriff von einem Endgerät T oder VP, beispielsweise zum "Telefonbuch" im Kundendatenspeicher des Speichers SP erfolgt über den Daten- und/oder Signalisierungskanal, während der Zugriff zu dem erweiterten Telefonbuch im Rechner PC über einen Nutzkanal erfolgen kann, wobei der Verbindungsaufbau wie bei einem normalen Gespräch durchgeführt wird. Die Anlagendaten können durch einen als Service-Stelle arbeitenden Fernsprechapparat T, der mit einer entsprechenden Anzeigevorrichtung versehen ist, abgerufen werden. Diese Daten sind für normale Teilnehmeranschlüsse nicht zugänglich, ebenso die Daten für die Gesprächsdatenverwaltung. Zu diesen kann beispielsweise der Vermittlungsplatz VP Zugriff haben, wobei die Übermittlung der Informationen wiederum über einen Nutzkanal erfolgt.

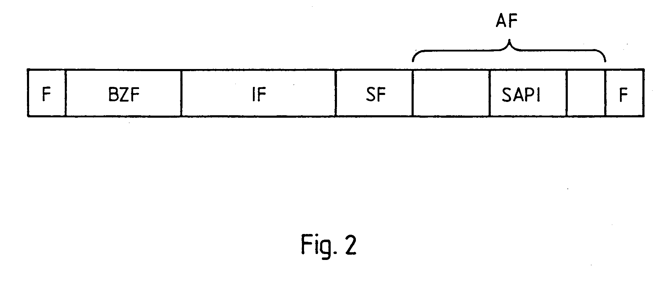

Wie bereits erwähnt, werden die vermittlungstechnischen Informationen, die über den Daten- und/oder Signalisierungskanal übermittelt werden, über den Systembus SB der betreffenden Gruppensteuerung GST bzw. der übergeordneten Steuereinrichtung ST zugeführt, wo sie beispielsweise zur Steuerung des Verbindungsauf- und -abbaus dienen. Die für die Hilftsteuereinrichtung HS bestimmten Informationen müssen besonders gekennzeichnet sein, damit sie nicht von der betreffenden Gruppensteuerung GST bzw. Steuereinrichtung ST verarbeitet werden. Die Übermittlung der Informationen auf dem peripheren Bussystem PB bzw. dem Systembus SB erfolgt nach dem Schicht-Zwei-Rahmen nach dem D-Kanal-Protokoll (s. TN-Nachrichten 1987, Heft 91, S. 41-47). Der schematische Aufbau dieses Rahmens wird in Fig. 2 gezeigt. Zwischen den Flag-Bits am Anfang und am Ende des Rahmens wird eine Blockprüfzeichenfolge BZF, ein Informationsfeld IF, ein Steuerfeld SF und ein Adreßfeld AF übertragen. Das Adreßfeld enthält u. a. eine Endgeräte-Adresse, welche einen Hinweis auf den Ursprung bzw. das Ziel der im Feld IF übertragenen Information angibt. Weiterhin enthält das Adreßfeld AF das Feld SAPI, welches Hinweise auf die Stelle gibt, in welcher die übertragene Information zu verarbeiten ist, bzw. in welcher die übertragene Information erarbeitet wurde. Vermittlungstechnische Informationen, die von einem Endgerät T, PC, VP, oder von einer Verbindungsleitung VL kommen, werden an ihrem Ursprung mit einer entsprechenden Markierung versehen, durch welche sichergestellt ist, daß die Information der Gruppensteuerung GST bzw. der Steuereinrichtung ST zugeführt und dort verarbeitet wird. (Eine Tabelle der Kennzeichen wird auf Seite 46 der genannten Literaturstelle gezeigt). Erfolgt nun eine Änderung im Kundendatenspeicher des Speichers SP durch ein berechtigtes Endgerät, so wird das vermittlungstechnische Kennzeichen in dem Endgerät bzw. in der Gegenanlage nicht eingesetzt, sondern stattdessen ein anderes vereinbartes Kennzeichen. Dies kann beispielsweise durch Betätigung einer bestimmten Taste oder selbsttätig während eines bestimmten Betriebszustandes des Endgeräts oder des Rechners erfolgen. Aufgrund des anderslautenden Kennzeichens wird in der Gruppensteuerung GST bzw. in der Steuereinrichtung ST die Information nicht verarbeitet sondern an die Hilfssteuereinrichtung HS weitergegeben. Hier erfolgt zunächst eine Analyse der Information, und zwar zunächst wird festgestellt, von welchem Endgerät oder Rechner die Information herrührt. Ist das betreffende Endgerät bzw. der Rechner zu Änderungen berechtigt, dann wird durch die Hilfssteuereinrichtung HS das besondere Kennzeichen aus der Information entfernt und durch dasjenige Kennzeichen ersetzt, welches die Gruppensteuerung GST bzw. Steuereinrichtung ST als zu verarbeitende Stelle bestimmt. Diese ändert aufgrund der Information entsprechend den Kundendatenspeicher.

Wie aus der Tabelle auf Seite 46 der genannten Literaturstelle "TN-Nachrichten" hervorgeht, stehen für die SAPI-Information sechs Bit zur Verfügung, so daß insgesamt 64 verschiedene Kombinationsmöglichkeiten gegeben sind. Von diesen werden z. Zt. nur wenige benutzt. Es stehen somit eine oder mehrere Code-Kombinationen für die Kennzeichnung von Signalisierungsinformationen für die Hilfssteuereinrichtung HS zur Verfügung, die außerdem nur innerhalb einer Vermittlungsanlage bzw. innerhalb eines aus beispielsweise aus Nebenstellenanlagen gebildeten Netzes verwendet werden.

Es ist denkbar, mehrere Hilfssteuereinrichtungen HS zu verwenden, wobei jede Hilfssteuereinrichtung HS für eine bestimmte Aufgabe bereitgestellt werden kann. Die Auswahl der jeweiligen Hilfssteuereinrichtung HS kann aufgrund entsprechender Programme oder Tastenbetätigungen ausgewählt werden. Der SAPI-Wert für Prozeduren für Leitungsvermittlung beträgt 0, so daß sämtliche sechs Bitstellen in diesem Fall auf 0 gesetzt sind. Das bedeutet, daß im normalen Betrieb innerhalb der Vermittlungsanlage bei Punkt zu Punkt geschalteten Verbindungen sämtliche Signalisierungsinformationen, die für die Steuerung von Vermittlungsvorgängen der Gruppensteuerung GST bzw. der Steuereinrichtung ST zugeführt oder von dieser erzeugt werden, den SAPI-Wert 0 enthalten. Das bedeutet, daß in der Hilfssteuereinrichtung HS die SAPI-Werte von Signalisierungsinformationen, die aufgrund eines bestimmten SAPI-wertes an diese gelangt sind, dort den SPAI-Wert 0 erhalten damit diese als normale Signalisierungsinformation in der Gruppensteuerung GST bzw. Steuereinrichtung ST verarbeitet werden.

Der Vorteil des erfindungsgemäßen Vorgehens, d. h. die Verwendung eines speziellen SAPI-Wertes zur Kennzeichnung von Signalisierungsinformationen, die für die Hilfssteuereinrichtung HS bestimmt sind, besteht darin, daß diese Informationen zunächst an der Gruppensteuerung GST bzw. Steuereinrichtung ST vorbeigeleitet werden und so in der Hilfssteuereinrichtung HS überprüft werden können. In der Hilfssteuereinrichtung HS werden nun diese Signalisierungsinformationen dahingehend umgewandelt, daß sie wie alle übrigen Signalisierungsinformationen von der Gruppensteuerung GST bzw. Steuereinrichtung ST verarbeitet werden können. Auf diese Weise ist es auch möglich, von der Hilfssteuereinrichtung HS Signalisierungsinformationen an die Gruppensteuerung GST bzw. Steuereinrichtung ST zu senden, um beispielsweise, wie bereits erwähnt, zum Zwecke des Datenabgleichs zwischen zwei Rechnern PC eine Nutzkanal-Verbindung herzustellen. Zu diesem Zweck wird beispielsweise in der Hilfssteuereinrichtung HS zunächst eine Aushängemeldung erzeugt, deren TEI-Wert im Adreßfeld AF (s. Fig. 2) der Anschlußlage des einen Rechners entspricht. Anschließend wird die Wahlinformation für einen Verbindungsaufbau zu dem anderen Rechner von der Hilfssteuereinrichtung HST zur Gruppensteuerung GST bzw. zur Steuereinrichtung ST übermittelt, wonach dann, wie bereits erwähnt, eine Nutzkanalverbindung zwischen beiden Rechnern zum Abgleich der geänderten Daten hergestellt wird. Es ist ebenso möglich, nicht nur auf Veranlassung der Hilfssteuereinrichtung derartige Verbindungen herzustellen, dies ist ebenso von berechtigten Endgeräten T, VP, P C, möglich. Die Signalisierungsinformation für einen Verbindungsaufbau wird durch das Endgerät mit dem SAIP-Wert gekennzeichnet, durch welchen die Übermittlung der Signalisierungsinformation an die Hilfssteuereinrichtung HS veranlaßt wird. Dort erfolgt wiederum die Änderung des SAPI-Wertes in der beschriebenen Weise und die Weitergabe an die Gruppensteuerung GST bzw. Steuereinrichtung ST. Bei den Rechnern PC kann es sich um größere Rechner oder auch um Personal-Computer handeln. Diese weisen eine entsprechende Programmierung auf, welche mit Hilfe einer Bedienerführung am Bildschirm die Eingabe der zu ändernden Daten erleichtert. Bisher wurde davon ausgegangen, daß es sich nur um eine digitale Fernmelde-anlage handelt, an welcher Rechner PC angeschlossen sind. Es ist jedoch auch ein Netz von Vermittlungsanlagen denkbar, die über Verbindungsleitungen VL miteinander verbunden sind. In diesem Fall müssen nicht an sämtlichen Fernmeldevermittlungsanlagen Rechner PC angeschlossen werden, vielmehr genügt es auch, nur bestimmte Fernmeldeanlagen innerhalb des Netzes mit derartigen Rechnern PC zu versehen. In einem solchen Fall kann von einem Rechner PC auch die Änderung in den Kundendatenspeichern mehrerer Fernmeldevermittlungsanlagen des Netzes vorgenommen werden, und zwar über Verbindungsleitungen VL, wobei die Vorgänge in der bereits beschriebenen Weise ablaufen.

Über die bereits im Ausführungsbeispiel beschriebenen Anwendungsfälle hinaus läßt sich eine nach der Erfindung ausgestattete Fernmeldevemittlungsanlage auch für andere Anwendangsfälle, d.h. Branchenlösungen ausgestalten. So kann ein Rechner PC für das Bestellwesen benutzt werden, wobei beispielsweise bei fehlenden Gegenständen selbsttätig vom Rechner PC eine Gesprächsverbindung zwischen der bestellenden Stelle und einer vorgegebenen Stelle veranlaßt werden kann. Eine weitere Möglichkeit besteht in der Personal-Zeit-Erfassung, wobei beispielsweise die Anwesenheit nicht nur zeitlich von dem Rechner PC ohne Mitwirkung der Fernmeldevermittlungsanlage erfaßt wird, sondern die zeitliche Anwesenheit eines Anschlußinhabers dem Kundendatenspeicher im Speicher SP mitgeteilt wird. In diesem Fall ist keine manuelle Eingabe von Änderungsdaten über die Eingabetastatur eines Endgeräts notwendig, vielmehr erfolgt die entsprechende Dateneingabe durch hierfür vorgesehene Erfassungsgeräte, die am Rechner PC angeschlossen sind. Umgekehrt ist es auch denkabr, die Personal-Zeiterfassung über die Endgeräte vorzunehmen und die Anwesenheitsdaten in den Kundendatenspeicher im Speicher SP einzutragen. Die Verwaltung der Personal-Zeit-Daten kann dann über einen Rechner PC erfolgen, welchem von der Gruppensteuerung GST bzw. Steuereinrichtung ST die abzugleichenden Daten mitgeteilt werden.

Ein weiterer Anwendungsfall wird im Krankenhaus gesehen, bei welchem ein Rechner PC als zentrale Erfassungs- und Steuereinrichtung für die Benutzung von Fernsehgeräten in Patientenzimmern eingesetzt wird. In diesem Fall können im Kundendatenspeicher im Speicher SP zunächst die Benutzungsdaten vorläufig festgehalten werden, da die Benutzung eines Fernsehgeräts und die Programmauswahl mit Hilfe von Wahlkennzeichen erfolgt, die in dem betreffenden Endgerät eingegeben werden. Das erste Wahlkennzeichen dient zur Kennzeichnung der Benutzung des Fernsehgeräts, während die weiteren Kennzeichen die Kanalauswahl betreffen. Diese Informationen müssen anschließend dem Rechner PC übergeben werden, damit dieser durch entsprechende Maßnahmen die in dem betreffenden Patientenzimmer befindliche Fernsteuereinrichtung veranlaßt, das Fernsehgerät einzuschalten, den gewünschten Kanal auszuwählen und den Kopfhöreranschluß des Fernsehgeräts mit dem elektroakustischen Wandler des betreffenden Patienten zu verbinden, welcher mit Hilfe des Endgeräts die Fernsehbenutzung veranlaßt hat.

Ein weiterer Anwendungsfall wird in der Behandlung von Notrufen gesehen, wobei Notrufmeldungen von, an einem Rechner PC angeschlossenen Meldern erfaßt und ausgewertet werden, um anschließend einen Verbindungsaufbau zu einem oder mehreren vorgegebenen Anschlüssen selbsttätig zu veranlassen, und zwar auf der Grundlage einer Anrufliste die im Rechner PC abgespeichert ist, wobei in Abhängigkeit von unterschiedlichen Notrufen oder Alarmen bestimmte Anschlüsse zur selbsttätigen Durchgabe einer Notruf- oder Alarmmeldung angewählt werden.

In dieser Tabelle in der Hilfssteuereinrichtung HS werden sämtliche momentan aktive Rechner PC vermerkt, wobei der Inhalt dieser Tabelle bei einer Datenänderung sämtlichen Rechnern PC mitgeteilt wird.

Zur Entlastung der Hilfssteuereinrichtung HS kann ein Teil der beschriebenen Funktionen der Hilfssteuereinrichtung HS in einen Rechner PC verlagert werden, welcher dann gegenüber den übrigen Rechnern PC als "Master" gekennzeichnet ist. Ist dieser Rechner PC nicht aktiv, dann wird dessen "Master"-Funktion wieder von der Hilfssteuereinrichtung HS oder auch von einem anderen aktiven Rechner PC übernommen.

## Patentansprüche

1. Digitale Fernmeldevermittlungsanlage mit einer einen Speicher aufweisenden Steuereinrichtung und mit einer Vielzahl von Anschlußschaltungen zum Anschluß von Endgeräten über Anschluß-leitungen und Leitungsschaltungen zum Anschluß von zu anderen vermittlungsanlagen führenden Verbindungsleitungen, wobei Anschluß- und/oder Verbindungsleitungen jeweils mindestens zwei Nutzkanäle und einen Daten- und/oder Signalisierungskanal aufweisen, die Informationen der Nutzkanäle zwischen der Anschluß- bzw. Leitungsschaltung und einer Koppeleinrichtung der Fernmeldevermittlungsanlage übertragen werdend während die Informationen des Daten- und/oder Signalisierungskanals zwischen der Anschluß- bzw. Leitungsschaltung der Steuereinrichtung über ein Bussystem übermittelt werden,
dadurch gekennzeichnet,
daß ein oder mehrere Rechner (PC) über jeweils eine Anschluß-leitung (AL) angeschlossen sind, daß die Steuereinrichtung (ST) eine Hilfssteuereinrichtung (HS) aufweist, daß durch an der Fernmeldevermittlungsanlage angeschlossene Einrichtungen (beispielsweise Endgeräte, Vermittlungsplätze, Rechner) Änderungen im Speicher (SP) veranlaßbar sind, daß durch die Hilfssteuereinrichtung (HS) die Änderungen im Speicher (SP) überwacht werden, daß die Hilfssteuereinrichtung (HS) eine Tabelle mit Informationen über die einzelnen Rechner (PC) aufweist und daß durch diese Informationen festgelegt ist, welche Daten des Speichers (SP) bzw. eines Rechners (PC) mit den Daten welches Rechners (PC) bzw. des Speichers (SP) ggf. abzugleichen sind.

2. Digitale Fernmeldevermittlungsanlage nach dem Oberbegriff des Patentanspruchs 1, bei welcher die vermittlungstechnischen, für die Steuereinrichtung derselben bestimmten, über den Daten- und/oder Signalisierungskanal übermittelten Informationen eines Endgeräts bzw. einer weiteren angeschlossenen Vermittlungsanlage durch ein besonderes Kennzeichen markiert werden und die Verarbeitung dieser Informationen aufgrund der Kennzeichnung in der Steuereinrichtung der Fernmeldevermittlungsanlage erfolgt,
**dadurch gekennzeichnet,**
daß die Steuereinrichtung (ST) eine Hilfssteuereinrichtung aufweist, daß durch ein berechtigtes Endgerät bzw. die weitere Vermittlungsanlage anstelle des besonderen (ersten) Kennzeichens ein abweichendes (zweites) Kennzeichen eingesetzt wird, daß die derart markierten Informationen des Daten- und/oder Signalisierungskanals der Hilfssteuereinrichtung (HS) übermittelt werden, in welcher das zweite Kennzeichen aus der Information entfernt und das besondere (erste) Kennzeichen eingefügt wird, worauf anschließend eine Übermittlung der Information an die Steuereinrichtung (ST) der Fernmeldevermittlungsanlage erfolgt.

3. Digitale Fernmeldevermittlungsanlage nach einem der Ansprüche 1 oder 2,
dadurch gekennzeichnet,
daß ein aktiver Rechner (PC) regelmäßig eine Meldung über seinen Betriebszustand an die Hilfssteuereinrichtung (HS) sendet.

4. Digitale Fernmeldevermittlungsanlage nach einem der Ansprüche 1 bis 3,
dadurch gekennzeichnet,
daß die Tabelle der Hilfssteuereinrichtung (HS) Informationen darüber enthält, welche Daten im Speicher (SP) der Steuereinrichtung (ST) durch welchen Rechner (PC) geändert worden sind.

5. Digitale Fernmeldevermittlungsanlage nach Anspruch 4,
dadurch gekennzeichnet,
daß aufgrund der Informationen der Tabelle der Hilfsteuereinrichtung (HS) ermittelt wird, welche geänderte Daten an welchen Rechner (PC) zu übermitteln sind.

6. Digitale Fernmeldevermittlungsanlage nach einem der Ansprüche 1 bis 5,
dadurch gekennzeichnet,
daß der Datenaustausch zwischen Rechner (PC) und der Steuereinrichtung (ST) über den Daten- und/oder Signalisierungskanal erfolgt.

7. Digitale Fernmeldevermittlungsanlage nach einem der Ansprüche 1 bis 6,
dadurch gekennzeichnet,
daß durch die Hilfssteuereinrichtung (HS) veranlaßt wird, bestimmte Daten zwischen bestimmten Rechnern (PC) auszutauschen, wobei der Verbindungsaufbau aufgrund von Informationen aus der Hilfssteuereinrichtung (HS) erfolgt und die Übertragung der Daten über einen oder beide Nutzkanäle durchgeführt wird.

8. Digitale Fernmeldevermittlungsanlage nach einem der Ansprüche 1 bis 7,
dadurch gekennzeichnet,
daß der Zugriff mehrerer Rechner (PC) zu dem Speicher (SP) der Steuereinrichtung (ST) durch die Hilfssteuereinrichtung (HS) gesteuert wird.

9. Digitale Fernmeldevermittlungsanlage nach einem der Ansprüche 1 bis 8,
dadurch gekennzeichnet,
daß Änderungen an Daten des Speichers (SP) der Steuereinrichtung (ST) auch von anderen berechtigten, an der Fernmeldevermittlungsanlage angeschlossenen Endgeräten (T, VP) möglich ist.

10. Digitale Fernmeldevermittlungsanlage nach einem der Ansprüche 1 bis 9,
dadurch gekennzeichnet,
daß die Hilfssteuereinrichtung (HS) einen Teil der Steuereinrichtung (ST) bildet.

11. Digitale Fernmeldevermittlungsanlage nach einem der Ansprüche 1 bis 10,
dadurch gekennzeichnet,
daß mehrere Hilfssteuereinrichtungen (HS) vorgesehen sind, die durch unterschiedliche Informationen auf dem Daten- und/oder Signalisierungskanal angesteuert werden.

12. Digitale Fernmeldevermittlungsanlage nach einem der Ansprüche 1 bis 11,
dadurch gekennzeichnet,
daß die Tabelle in der Hilfssteuereinrichtung (HS) Informationen über die aktiven Rechner (PC) enthält.

13. Digitale Fernmeldevermittlungsanlage nach einem der Ansprüche 1 bis 12,
dadurch gekennzeichnet,
daß der Datenabgleich zwischen der Hilfssteuereinrichtung (HS) und einem Rechner (PC) erfolgt und der Datenabgleich zwischen weiteren Rechnern (PC) durch einen Rechner (PC) und die Datenübertragung über einen oder beide Nutzkanäle erfolgt.

14. Digitale Fernmeldevermittlungsanlage nach einem der Ansprüche 1 bis 13,
dadurch gkennzeichnet,
daß ein Teil der Funktionen der Hilfssteuereinrichtung (HS) in einen bestimmten aktiven Rechner (PC) verlagert ist.

15. Digitale Fernmeldevermittlugnsanlage nach Anspruch 14,
dadurch gekennzeichnet,
daß bei Ausfall des bestimmten Rechners (PC) die Funktionen durch die Hilfssteuereinrichtung (HS) oder durch einen anderen aktiven Rechner (PC) wahrgenommen werden.

## Claims

1. Digital communications exchange with a control equipment displaying a storage device and with a plurality of subscriber circuits for the connection of terminal devices by way of subscriber lines and line circuits for the connection of connecting lines leading to other exchanges, wherein subscriber lines and/or connecting lines each display at least two information channels and one data channel and/or signalling channel and the information signals of the information channels are transmitted between the subscriber circuit or the line circuit and a coupling equipment of the communications exchange, whilst the information signals of the data channel and/or signalling channel are communicated by way of a bus system between the subscriber circuit or the line circuit and the control equipment, characterised thereby, that one or more computers (PC) are each connected by way of a respective subscriber line (AL), that the control equipment (ST) displays an auxiliary control equipment (HS), that changes in the storage device (SP) are initiatable by equipments (for example terminal devices, switchboard positions, computers) connected to the communications exchange, that the changes in the storage device (SP) are monitored by the auxiliary control equipment (HS), that the auxiliary control equipment (HS) has a table with information data about the individual computers (PC) and that it is determined by these information data, which data of the storage device (SP) or of a computer (PC) are in a given case to be made equal to the data of which computer (PC) or of the storage device (SP).

2. Digital communications exchange according to the classifying clause of the patent claim 1, in which the communications technique information signals, which are intended for the control equipment thereof and communicated by way of the data channel and/or signalling channel, of a terminal device or of a further connected communications exchange are marked by a special identification and the processing of these information signals takes place in the control equipment of the communications exchange on the basis of the identification, characterised thereby, that the control equipment (ST) comprises an auxiliary control equipment (HS), that in place of the special (first) identification, a different (second) indentification is used by an authorised terminal device or the further communications exchange, that the information signals, which are marked in such a manner, of the data channel and/or signalling channel are communicated to the auxiliary control equipment (HS), in which the second identification is removed from the information signal and the special (first) identification is inserted, whereupon a communication of the information signal takes place subsequently to the control equipment (ST) of the communications exchange.

3. Digital communications exchange according to one of the claims 1 and 2, characterised thereby, that an active computer (PC) regularly sends a report about its operational state to the auxiliary control equipment (HS).

4. Digital communications exchange according to one of the claims 1 to 3, characterised thereby, that the table of the auxiliary control equipment (HS) contains information data about which data in the storage device (SP) of the control equipment (ST) have been changed by which computer (PC).

5. Digital communications exchange according to claim 4, characterised thereby, that it is ascertained on the basis of the information data of the table of the auxiliary control equipment (HS) which changed data are to be communicated to which computer (PC).

6. Digital communications exchange according to one of the claims 1 to 5, characterised thereby, that the data exchange between the computers (PC) and the control equipment (ST) takes place by way of the data channel and/or signalling channel.

7. Digital communications exchange according to one of the claims 1 to 6, characterised thereby, that it is initiated through the auxiliary control equipment (HS) to exchange certain data between certain computers (PC), wherein the establishment of connections takes place on the basis of information data from the auxiliary control equipment (HS) and the transmission of the data is performed by way of one or both the information channels.

8. Digital communications exchange according to one of the claims 1 to 7, characterised thereby, that the access of several computers (PC) to the storage device (SP) of the control equipment (ST) is controlled by the auxiliary control equipment (HS).

9. Digital communications exchange according to one of the claims 1 to 8, characterised thereby, that changes in data of the storage device (SP) of the control equipment (ST) are also possible from other authorised terminal devices (T, VP) connected to the communications exchange.

10. Digital communications exchange according to one of the claims 1 to 9, characterised thereby, that the auxiliary control equipment (HS) forms a part of the control equipment (ST).

11. Digital communications exchange according to one of the claims 1 to 10, characterised thereby, that several auxiliary control equipments (HS) are provided, which are driven by different information signals on the data channel and/or signalling channel.

12. Digital communications exchange according to one of the claims 1 to 11, characterised thereby, that the table of the auxiliary control equipment (HS) contains information data about the active computers (PC).

13. Digital communications exchange according to one of the claims 1 to 12, characterised thereby, that the data equalisation takes place between the auxiliary control equipment (HS) and a computer (PC) and the data equalisation between further computers (PC) takes place through a computer (PC) and the data transmission takes place by way of one or both the information channels.

14. Digital communications exchange according to one of the claims 1 to 13, characterised thereby, that a part of the functions of the auxiliary control equipment (HS) is shifted into a certain active computer (PC).

15. Digital communications exchange according to claim 14, characterised thereby, that on the failure of the certain computer (PC), the functions are taken over by the auxiliary control equipment (HS) or by another active computer (PC).

## Revendications

1. Central de télécommunication numérique comportant un dispositif de commande possédant une mémoire, et une multiplicité de circuits de raccordement permettant le raccordement de terminaux par l'intermédiaire de lignes de raccordement et de circuits de lignes pour le raccordement de lignes de jonction aboutissant à d'autres centraux, et dans lequel des lignes de raccordement et/ou des lignes de jonction possèdent respectivement au moins deux canaux utiles et un canal de transmission de données et/ou un canal de signalisation, qui transmettent des informations des canaux utiles entre le circuit de raccordement ou le circuit de ligne et un dispositif de couplage du central de télécommunication, tandis que les informations du canal de transmission de données et/ou du canal de signalisation sont retransmises entre le circuit de raccordement ou le circuit de ligne et le dispositif de commande, par l'intermédiaire d'un système de bus, caractérisé en ce
qu'un ou plusieurs ordinateurs (PC) sont raccordés par l'intermédiaire d'une ligne respective de raccordement (AL), que le dispositif de commande (ST) comporte un dispositif de commande auxiliaire (HS), que des modifications dans la mémoire (SP) peuvent être déclenchées par des dispositifs (par exemple des terminaux, des postes d'opératrices, des ordinateurs), raccordés au central de télécommunication, que les modifications dans la mémoire (SP) sont contrôlées par le dispositif de commande auxiliaire (HS), que le dispositif de commande auxiliaire (HS) comporte un tableau contenant des informations concernant les différents ordinateurs (PC) et que ces informations déterminent quelles données de la mémoire (SP) ou d'un ordinateur (PC) doivent être éventuellement équilibrées avec les données de quel ordinateur (PC) ou de la mémoire (SP).

2. Central de télécommunication numérique selon le préambule de la revendication 1, dans lequel les informations techniques de commutation, destinées au dispositif de commande de ce central, sont retransmises par l'intermédiaire du canal de transmission de données et/ou canal de signalisation, d'un terminal ou d'un autre central raccordé, sont marquées par un signal caractéristique particulier et le traitement de ces informations s'effectue sur la base de la caractérisation dans le dispositif de commande du central de télécommunication, caractérisé en ce que le dispositif de commande (ST) comporte un dispositif de commande auxiliaire, qu un terminal autorisé ou l'autre central introduit à la place du (premier) signal caractéristique particulier un (second) signal caractéristique différent, que les informations, marquées de cette manière, du canal de transmission de données et/ou du canal de signalisation sont retransmises au dispositif de commande auxiliaire (HS), dans lequel le second signal caractéristique est retiré de l'information, et le (premier) signal caractéristique particulier est inséré, à la suite de quoi l'information est retransmise au dispositif de commande (ST) du central de télécommunication.

3. Central de télécommunication numérique selon l'une des revendications 1 ou 2, caractérisé en ce qu'un ordinateur actif (PC) envoie régulièrement une signalisation concernant son état de fonctionnement au dispositif de commande auxiliaire (HS).

4. Central de télécommunication numérique selon l'une des revendications 1 à 3, caractérisé en ce que le tableau du dispositif de commande auxiliaire (HS) contient des informations indiquant quelles données ont été modifiées dans la mémoire (SP) du dispositif de commande (ST) et par quel ordinateur (PC).

5. Central de télécommunication numérique selon la revendication 4, caractérisé en ce qu'une détermination indiquant quelles données modifiées doivent être retransmises à quel ordinateur (PC), est établie sur la base des informations du tableau du dispositif de commande auxiliaire (HS).

6. Central de télécommunication numérique selon l'une des revendications 1 à 5, caractérisé en ce que l'échange des données entre l'ordinateur (PC) et le dispositif de commande (ST) s'effectue par l'intermédiaire du canal de transmission de données et/ou de signalisation.

7. Central de télécommunication numérique selon l'une des revendications 1 à 6, caractérisé en ce que le dispositif de commande auxiliaire (HS) déclenche l'échange de données déterminées entre des ordinateurs (PC) déterminés, l'établissement de la liaison s'effectuant sur la base d'informations tirées du dispositif de commande auxiliaire (HS), et la transmission des données étant exécutée par l'intermédiaire d'un ou des deux canaux utiles.

8. Central de télécommunication numérique selon l'une des revendications 1 à 7, caractérisé en ce que l'accès de plusieurs ordinateurs (PC) à la mémoire (SP) du dispositif de commande (ST) est commandé par le dispositif de commande auxiliaire (HS).

9. Central de télécommunication numérique selon l'une des revendications 1 à 8, caractérisé en ce que des modifications apportées aux données de la mémoire (SP) du dispositif de commande (ST) peuvent être également appliquées par d'autres terminaux autorisés (T, VP), raccordés au central de télécommunication.

10. Central de télécommunication numérique selon l'une des revendications 1 à 9, caractérisé en ce que le dispositif de commande auxiliaire (HS) constitue une partie du dispositif de commande (ST).

11. Central de télécommunication numérique selon l'une des revendications 1 à 10, caractérisé en ce qu'il est prévu plusieurs dispositifs de commande auxiliaire (HS), qui sont commandés par des informations différentes dans le canal de transmission de données et/ou le canal de signalisation.

12. Central de télécommunication numérique selon l'une des revendications 1 à 11, caractérisé en ce que le tableau contenu dans le dispositif de commande auxiliaire (HS) contient des informations concernant les ordinateurs actifs (PC).

13. Central de télécommunication numérique selon l'une des revendications 1 à 12, caractérisé en ce que l'équilibrage des données s'effectue entre le dispositif de commande auxiliaire (HS) et un ordinateur (PC) et que l'équilibrage des données entre d'autres ordinateurs (PC) est réalisé par un ordinateur (PC) et la transmission de données est exécutée par l'intermédiaire d'un ou des deux canaux utiles.

14. Central de télécommunication numérique selon l'une des revendications 1 à 13, caractérisé en ce qu'une partie des fonctions du dispositif de commande auxiliaire (HS) sont transférées dans un ordinateur actif (PC).

15. Central de télécommunication numérique selon la revendication 14, caractérisé en ce que, dans le cas de la défaillance de l'ordinateur déterminé (PC), les fonctions sont assurées par le dispositif de commande auxiliaire (HS) ou par un autre ordinateur actif (PC).
